# EUROPEAN PATENT APPLICATION

(11) **EP 4 730 233 A1**
(43) Date of publication of application: **22.04.2026**
(21) Application number: 25206709.5
(22) Date of filing: 03.10.2025
(51) Int. Cl.: G06Q 10/0631, G06Q 10/0639, G06Q 50/04

(54) **DETERMINATION SYSTEM, DETERMINATION METHOD, STORAGE MEDIUM, AND EXPOSURE DEVICE ASSEMBLY METHOD**

(30) Priority: 16.10.2024 JP 2024180643
(71) Applicant: Canon Kabushiki Kaisha, Tokyo, 146-8501 (JP)
(72) Inventor: KEMMOKU, Hiromi, Tokyo, 146-8501 (JP)
(74) Representative: Canon Europe Limited

(57) **Abstract**

Provided is a determination system (100) for making a determination regarding work performed by a worker (110, 120, 130) at each of a plurality of work positions. In this determination system, a position acquisition unit acquires information on a position of the worker (110, 120, 130), an image capture unit captures a video of the work performed by the worker (110, 120, 130), a reception unit (102) receives position information obtained from the position acquisition unit and video information obtained from the image capture unit, and a determination unit (103) determines the presence or absence of an abnormality in the work on the basis of the position information and the video information received by the reception unit (102). The image capture unit captures the video of the work while being carried by the worker (110, 120, 130).

## Description

### TECHNICAL FIELD

The present disclosure relates to a determination system, a determination method, a storage medium, and an exposure device assembly method.

### BACKGROUND

When a worker assembles a device or the like, the worker may make a mistake. Japanese Patent Laid-Open No. 2017-220017 discloses a method for acquiring a video of work by a worker, identifying the posture of the worker during the work on the basis of the acquired video, and determining the presence or absence of an abnormality in the work on the basis of the identified posture of the worker during the work.

However, with the method disclosed in Japanese Patent Laid-Open No. 2017-220017, determining the presence or absence of an abnormality in the work by the worker is difficult if the worker changes the position where the work is performed and changes the work specifics.

### SUMMARY

The present disclosure is directed to providing a determination system capable of determining the presence or absence of an abnormality in work by a worker, even if the worker changes the position where the work is performed and changes the work specifics.

The present disclosure in its first aspect provides a determination system as specified in claim 1. Optional features are specified in claims 2 to 15.

The present disclosure in its second aspect provides a determination method as specified in claim 16.

The present disclosure in its third aspect provides a non-transitory computer-readable storage medium as specified in claim 17.

The present disclosure in its fourth aspect provides an exposure device assembly method as specified in claim 18. An optional feature is specified in claim 19.

Features of the present disclosure will become apparent from the following description of embodiments with reference to the attached drawings. The following description of embodiments is described by way of example.

### BRIEF DESCRIPTION OF THE DRAWINGS

Fig. 1 is a schematic diagram illustrating a configuration of an exposure device.
Fig. 2 is a diagram of a projection optical system as seen from the +Z direction.
Fig. 3A is a diagram illustrating work standards of assembly work in section E.
Fig. 3B is a diagram illustrating work standards of assembly work in section E.
Fig. 4A is a diagram illustrating work standards of assembly work in section F.
Fig. 4B is a diagram illustrating work standards of assembly work in section F.
Fig. 5A is a diagram illustrating work standards of assembly work in section G.
Fig. 5B is a diagram illustrating work standards of assembly work in section G.
Fig. 6 is a diagram illustrating items carried by workers during work in a first embodiment.
Fig. 7 is a schematic diagram of a determination system in a first embodiment.
Fig. 8 is a diagram illustrating a flowchart of the determination of the presence or absence of an abnormality with respect to work in a first embodiment.
Fig. 9 is a diagram illustrating an example of the flow of work by workers in a first stage.
Fig. 10A is a diagram illustrating an example in which workers move and change work specifics.
Fig. 10B is a diagram illustrating an example in which workers move and change work specifics.
Fig. 11A is a diagram illustrating an example of determination processing by a determination unit with respect to work by workers in a first stage.
Fig. 11B is a diagram illustrating an example of determination processing by a determination unit with respect to work by workers in a first stage.
Fig. 11C is a diagram illustrating an example of determination processing by a determination unit with respect to work by workers in a first stage.
Fig. 12A is a schematic diagram of a case of acquiring information related to work on the basis of a torque measurement value.
Fig. 12B is a schematic diagrams of a case of acquiring information related to work on the basis of a torque measurement value.
Fig. 13 is a diagram illustrating an example of the flow of work by workers in a second stage.
Fig. 14A is a diagram illustrating an example of determination processing by a determination unit with respect to work by workers in a first stage and a second stage.
Fig. 14B is a diagram illustrating an example of determination processing by a determination unit with respect to work by workers in a first stage and a second stage.
Fig. 15 is a schematic diagram of the acquisition of the positions of workers by an area camera.
Fig. 16A is a schematic diagram of a case of acquiring information related to work in work involving the use of a cable.
Fig. 16B is a schematic diagram of a case of acquiring information related to work in work involving the use of a cable.
Fig. 17 is a diagram illustrating a flowchart of an exposure device assembly method in a second embodiment.

### DESCRIPTION OF THE EMBODIMENTS

Hereinafter, embodiments of the present disclosure will be described on the basis of the drawings. However, the following embodiments do not limit the disclosure as recited in the claims. Although multiple features are described in the embodiments, it is not necessarily the case that all of the features are essential to the disclosure, and moreover, the embodiments may be combined in any way. Furthermore, in the drawings, the same or similar portions of the configuration are denoted with the same reference signs, and duplicate description is omitted.

In this specification and the drawings, basically, directions are indicated by an XYZ coordinate system of mutually orthogonal axes in which the vertical direction is defined to be the Z-axis direction and the horizontal plane perpendicular to the vertical direction is defined to be the XY plane. However, if an XYZ coordinate system is described in a drawing, that coordinate system shall take precedence.

The following describes a specific configuration of each embodiment.

### First Embodiment

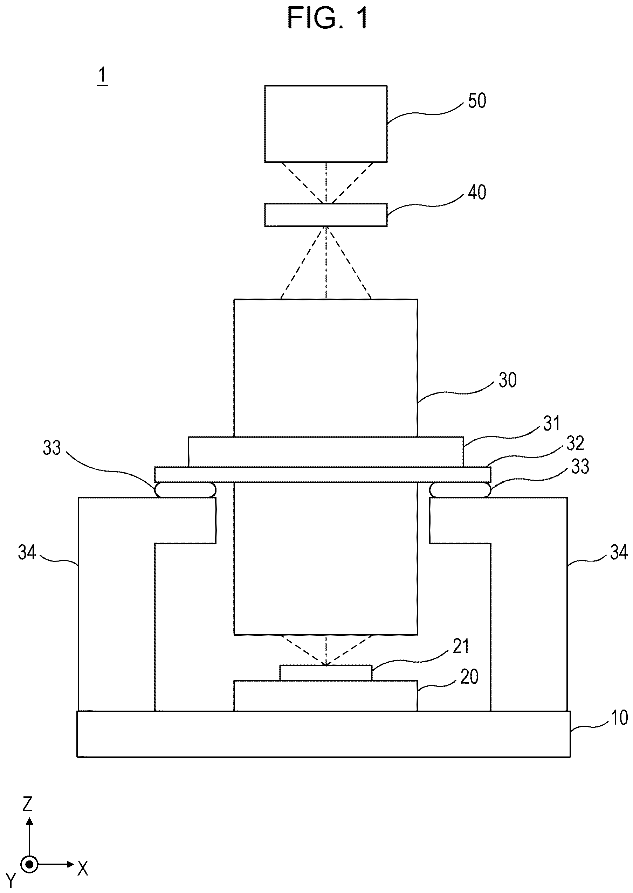

Fig. 1 is a schematic diagram illustrating a configuration of an exposure device 1. The exposure device 1 includes an illumination optical system 50 that emits light, a projection optical system 30, a reticle stage (not illustrated) that holds a reticle 40, and a stage 20 that can be moved while holding a substrate 21. In addition, the exposure device 1 includes a main body frame 10, a first member 34 placed on the main body frame 10, an anti-vibration part 33 placed on the first member 34, and a lens barrel surface plate 32 placed on the anti-vibration part 33. The projection optical system 30 includes a lens barrel structural part 31 in an outer circumferential part of a lens barrel, and by securing the lens barrel structural part 31 to the lens barrel surface plate 32, the position of the projection optical system 30 is fixed in place.

In the exposure device 1, exposure light from a light source (not illustrated) passes through the illumination optical system 50 to illuminate the reticle 40 held on the reticle stage. The light transmitted through the reticle 40 passes through the projection optical system 30 to irradiate the substrate 21. At this time, light from a pattern formed in the reticle 40 forms an image on the surface of the substrate 21, and a shot area of the substrate 21 (photosensitive material on the substrate 21) is exposed by the pattern image. The exposure device 1 thus exposes the shot area on the substrate 21, and similarly exposes each of a plurality of shot areas.

Next, the installation of the projection optical system 30 will be described. The assembly of the exposure device 1 is achieved by one or more workers performing work according to a work standards document. In the case where multiple workers assemble the exposure device 1, the multiple workers proceed with the work at the same time at respective work positions. The position of the projection optical system 30 is fixed in place by securing the lens barrel structural part 31 to the lens barrel surface plate 32, but when doing so, the projection optical system 30 must be positioned correctly relative to the stage 20. This positioning involves measuring the position of a light axis LA of the projection optical system 30 relative to a center position in the XY plane of the stage 20, for example, with the position being adjusted and finalized such that the assembly error falls within tolerance. After the projection optical system 30 is positioned, the workers secure (fasten) the lens barrel structural part 31 to the lens barrel surface plate 32 using a plurality of bolts or the like. During this series of work operations for the securing work, the workers may in some cases change the position where the work is performed (work position) and change the work specifics (type of work).

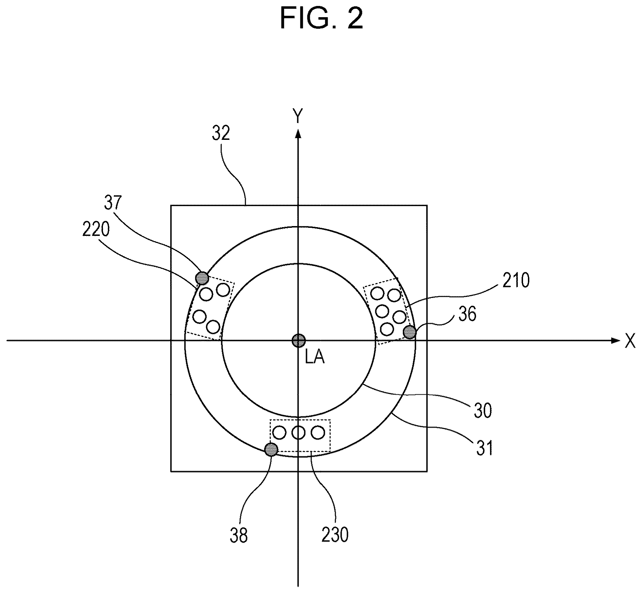

Fig. 2 is a diagram of the projection optical system 30 as seen from the +Z direction. The lens barrel structural part 31 is secured to the lens barrel surface plate 32 in three areas, namely a section E 210, a section F 220, and a section G 230. Section E 210 includes five fastening positions. Section E 220 includes four fastening positions. Section G includes three fastening positions. Note that the arrangement and number of securing areas as well as the arrangement and number of fastening positions are an example, and are not particularly limited to the example in Fig. 2.

In the present embodiment, a reference point for work in section E 210 is defined to be a reference point 36, a reference point for work in section F 220 is defined to be a reference point 37, and a reference point for work in section G 230 is defined to be a reference point 38. The coordinates of the reference point 36 are (Xe, Ye, Ze), the coordinates of the reference point 37 are (Xf, Yf, Zf), and the coordinates of the reference point 38 are (Xg, Yg, Zg).

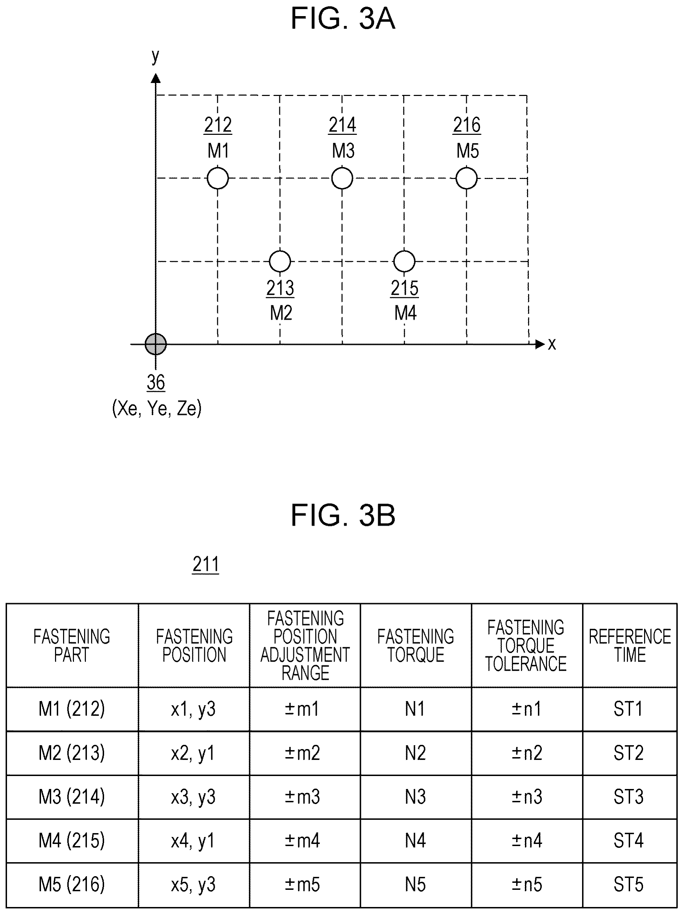

Figs. 3A and 3B illustrate work standards of assembly work in section E 210, in which Fig. 3A illustrates the fastening positions in section E 210 and Fig. 3B illustrates a work standards table 211 for section E 210. As illustrated in Fig. 3A, section E 210 includes five fastening positions: M1 (212), M2 (213), M3 (214), M4 (215), and M5 (216). Also, as illustrated in Fig. 3B, the work standards table 211 includes, for each fastening position in section E 210, information about the fastening position (fastening coordinates), the adjustment range of the fastening position, the torque when fastening, the tolerance of the torque, and a reference time (standard time) that the work takes.

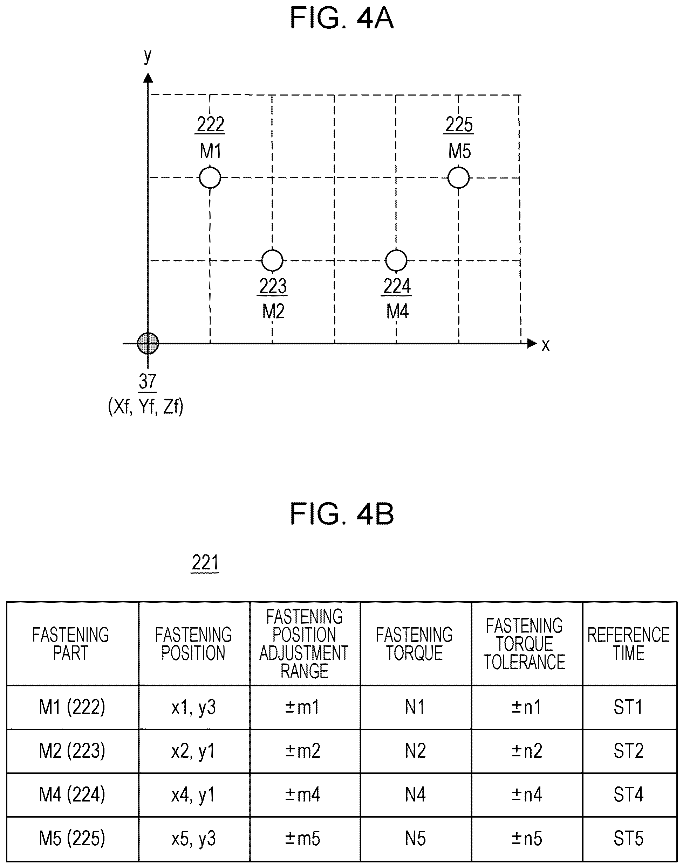

Figs. 4A and 4B illustrate work standards of assembly work in section F 220, in which Fig. 4A illustrates the fastening positions in section F 220 and Fig. 4B illustrates a work standards table 221 for section F 220. As illustrated in Fig. 4A, section F 220 includes four fastening positions: M1 (222), M2 (223), M4 (224), and M5 (225). Also, as illustrated in Fig. 4B, the work standards table 221 includes, for each fastening position in section F 220, information about the fastening position (fastening coordinates), the adjustment range of the fastening position, the torque when fastening, the tolerance of the torque, and a reference time (standard time) that the work takes.

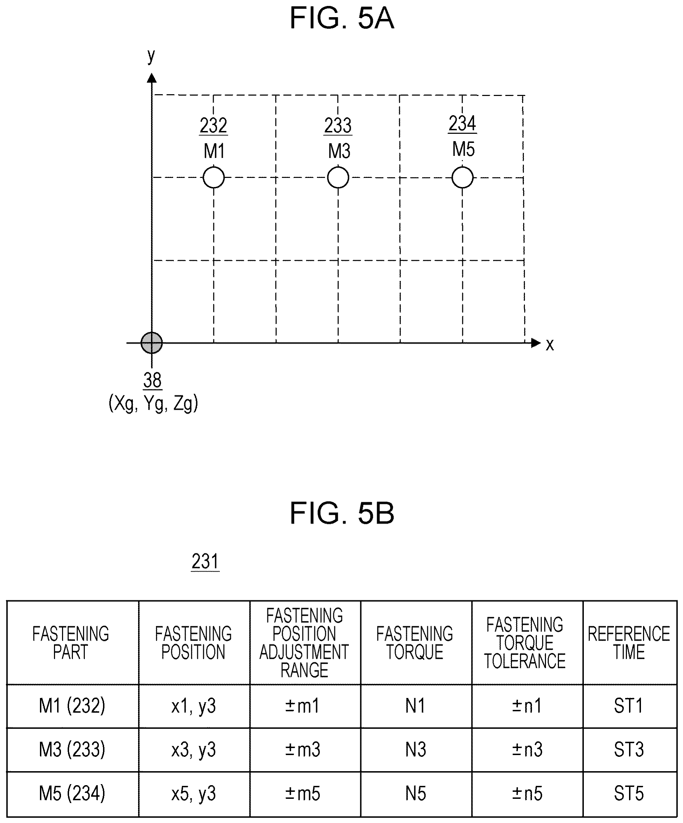

Figs. 5A and 5B illustrate work standards of assembly work in section G 230, in which Fig. 5A illustrates the fastening positions in section G 230 and Fig. 5B illustrates a work standards table 231 for section G 230. As illustrated in Fig. 5A, section G 230 includes three fastening positions: M1 (232), M3 (233), and M5 (234). Also, as illustrated in Fig. 5B, the work standards table 231 includes, for each fastening position in section G 230, information about the fastening position (fastening coordinates), the adjustment range of the fastening position, the torque when fastening, the tolerance of the torque, and a reference time that the work takes. In the example in each of Figs. 3A and 3B, Figs. 4A and 4B, and Figs. 5A and 5B, the work standards table includes information about the fastening position (fastening coordinates), the adjustment range of the fastening position, the torque when fastening, the tolerance of the torque, and a reference time that the work takes. However, the work standards table need not include all of the above information, and may also include at least one of the above.

Preferably, work by workers in the manufacture of goods is performed correctly in accordance with a reference such as a work standards table. However, workers sometimes make mistakes. Such work mistakes can be detected by, for example, capturing video of the work performed by a worker at a specific position using an image capture device disposed at a prescribed position, and determining the presence or absence of an abnormality in the work (whether the work was performed correctly or not) on the basis of the captured video.

However, if the worker moves to perform different work, it is necessary to place image capture devices at positions corresponding to each of the work positions, and when there are numerous work positions, many image capture devices are required. Furthermore, the system becomes more complex as a result of capturing images with many image capture devices corresponding to the numerous work positions.

When there are multiple workers, it is necessary to identify which worker performed which work.
For this reason, it is necessary to provide a worker recognition system (for example, a face authentication system) at each work position, making the system even more complex.

Accordingly, the present embodiment provides a determination system for determining work performed by a worker at each of a plurality of work positions. The determination system determines the presence or absence of an abnormality in the work on the basis of position information, which is information about the position of a worker when the worker performed the work, and video information, which is information pertaining to a video taken when the worker performed the work. Specifically, the position information and the video information are associated with each other, work specifics in the video are identified on the basis of the position information, and information about a reference for the identified work specifics is compared to the video information to determine the presence or absence of an abnormality in the work by the worker. According to the determination system, even if the worker moves and changes the work specifics, the work specifics and the video can be associated with each other by a simple configuration on the basis of the position information on the worker (information about the work position) to determine whether or not the work by the worker was performed correctly. The determination system in the present embodiment exhibits an advantageous effect when a lone worker moves and changes the work specifics, but also exhibits a particularly advantageous effect when multiple workers move and change the work specifics. According to the determination system in the present embodiment, even if multiple workers move and change the work specifics, it can be determined whether or not the work by each worker was performed correctly, without needing to provide a worker recognition system such as a face authentication system.

The present embodiment gives an example in which one worker performs work in each of section E 210, section F 220, and section G 230, for a total of three workers who proceed with the work at substantially the same time. Note that although the present embodiment gives an example with three workers, there may be one or multiple workers, the number of which is not particularly limited. Also, work by multiple persons need not be performed at the same time.

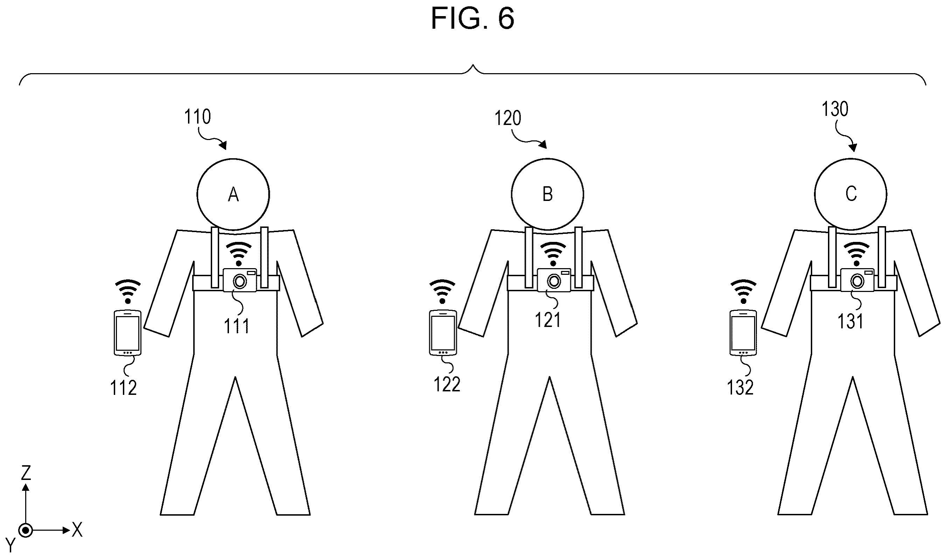

Fig. 6 is a diagram illustrating items carried by workers during work in the present embodiment. Fig. 6 illustrates a worker A 110, a worker B 120, and a worker C 130 who perform assembly work. In the example in Fig. 6, the worker A 110 is carrying an image capture device 111 and a communication device 112, the worker B 120 is carrying an image capture device 121 and a communication device 122, and the worker C 130 is carrying an image capture device 131 and a communication device 132. In other words, each worker is carrying a respective image capture device and a respective communication device. Note that the image capture device is preferably secured to the body so as not to interfere with work.

Each image capture device includes an image capture unit. The image capture device 111 captures a video of work performed by the worker A 110, the image capture device 121 captures a video of work performed by the worker B 120, and the image capture device 131 captures a video of work performed by the worker C 130. Each image capture device also includes a position acquisition unit that acquires (generates) information pertaining to the position of the image capture device itself. In other words, the image capture device 111 generates information pertaining to the position of the image capture device 111 during the work by the worker A 110, the image capture device 121 generates information pertaining to the position of the image capture device 121 during the work by the worker B 120, and the image capture device 131 generates information pertaining to the position of the image capture device 131 during the work by the worker C 130. In this situation, since each worker carries an image capture device, the position of an image capture device is also the position of a worker. Consequently, the image capture device 111 generates information pertaining to the position of the worker A 110 during the work by the worker A 110. The image capture device 121 generates information pertaining to the position of the worker B 120 during the work by the worker B 120. The image capture device 131 generates information pertaining to the position of the worker C 130 during the work by the worker C 130. Each image capture device transmits the captured video and the information pertaining to position to a reception unit 102 described later.

The communication device 112 transmits information pertaining to the work time of the worker A 110 to the reception unit 102, the communication device 122 transmits information pertaining to the work time of the worker B 120 to the reception unit 102, and the communication device 132 transmits information pertaining to the work time of the worker C 130 to the reception unit 102. Each communication device may detect the start and end of work automatically from the motion of the worker and transmit a start time and an end time of work to the reception unit 102. Alternatively, each communication device may include an input unit, the worker may enter the start time and the end time of work into the communication device, and the communication device may transmit the entered start time and end time of work to the reception unit 102. Alternatively, each communication device may identify the start time and the end time of work by determining whether or not work is in progress on the basis of position information on the worker. The start time and the end time of work are transmitted as discrete information for each instance of work.

Each communication device is further provided with a display unit, and as described later, can also receive information transmitted from a transmission unit and display the received information to notify the worker. Note that although the present embodiment gives an example in which the image capture device and the communication device are separate, the image capture device may also fulfill the role of the communication device. In this case, the image capture device can identify the start time of work and the end time of work on the basis of captured video data.

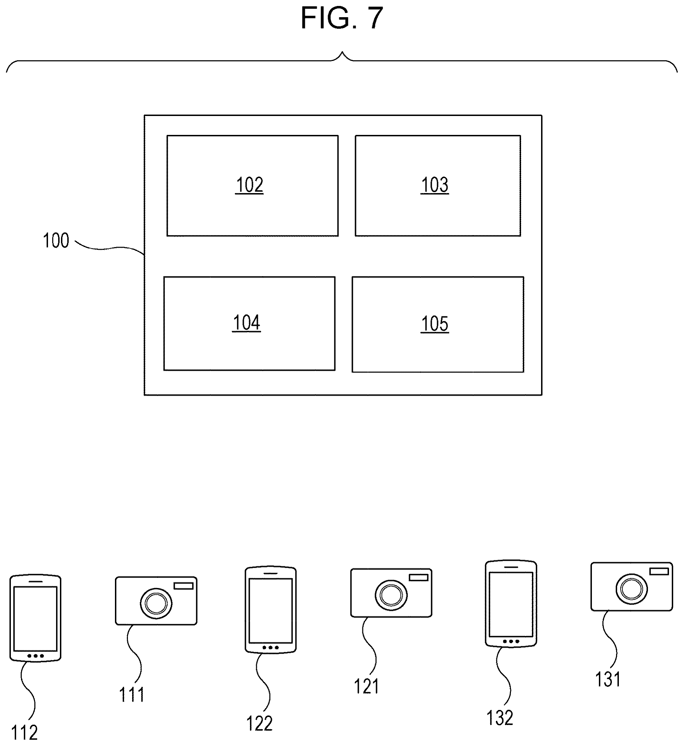

Fig. 7 is a schematic diagram of a determination system 100 in the present embodiment. The determination system 100 has a reception unit 102, a determination unit 103, a transmission unit 104, and a storage unit 105. The determination unit 103 includes a processing unit, a bus, read-only memory (ROM), random-access memory (RAM), and a storage device, with each component functioning (executing) in accordance with a program. The processing unit is a processing device that performs computations for control in accordance with a program, and controls each component connected to the bus. The processing unit may be configured as: a central processing unit (CPU); a programmable logic device (PLD) such as a field-programmable gate array (FPGA); an application-specific integrated circuit (ASIC); a computer with a built-in program; or a combination of some or all of the above. The ROM is a memory only for reading data, and stores programs and/or data. The RAM is a memory for reading and writing data, and is used to store programs and/or data. The RAM is used to temporarily store data such as the results of computations by a CPU. The storage device is also used to store programs and/or data. The storage device is also used as a temporary storage area for programs and data of an operating system (OS) of the determination unit 103. The storage device has slower data input and output compared to the RAM, but is capable of storing large amounts of data. Preferably, the storage device is a non-volatile storage device that can store data persistently so that the stored data can be referenced over a long period of time. The storage device is primarily configured as a magnetic storage device (HDD), but may also be a device for reading data from and writing data to an external medium such as a CD, a DVD, or a memory card inserted into the device.

The reception unit 102 receives video information, which is information pertaining to a video of work, and position information, which is information pertaining to the position of a worker, from the image capture device. The reception unit 102 additionally receives information pertaining to work time from the communication device.

The determination unit 103 identifies the work specifics (type of work) in the video of the work on the basis of the information pertaining to the position of the worker, and compares information about a reference for the identified work specifics to the captured video of the work to determine the presence or absence of an abnormality in the work.

The transmission unit 104 transmits a result determined by the determination unit 103 to the communication device, and notifies the worker of the determination result regarding the work. The notification is provided by, for example, displaying the determination result on a display unit provided in the communication device. The storage unit 105 stores the information about a reference for work specifics to be used in the determination by the determination unit 103. The information about a reference for work specifics includes, for example, at least one of the following: information included in work standards, information pertaining to a video of work that serves as a reference, and information pertaining to an image of work that serves as a reference. The present embodiment gives an example in which the information about a reference for work specifics is assumed to be information in work standards. The storage unit 105 may additionally store the result determined by the determination unit 103.

Fig. 7 illustrates an example in which the determination system 100 does not include the image capture devices (111, 121, 131) that capture videos of work performed by workers and the communication devices (112, 122, 132) that transmit information pertaining to work time. However, the determination system 100 may also include the image capture devices (111, 121, 131) that capture videos of work performed by workers and the communication devices (112, 122, 132) that transmit information pertaining to work time.

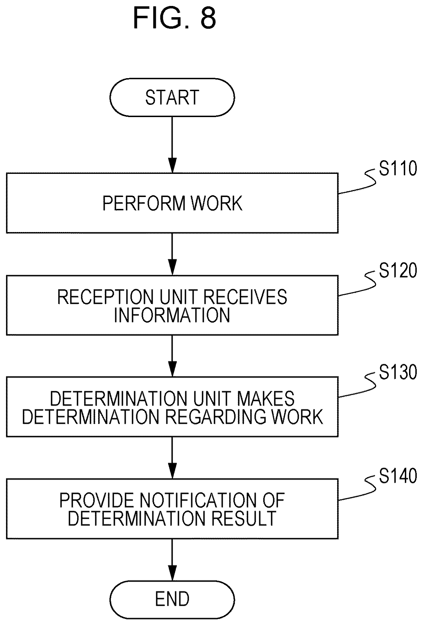

Fig. 8 is a diagram illustrating a flowchart of the determination of the presence or absence of an abnormality with respect to work in the present embodiment. First, each worker performs work at a respective work position (S110). At this time, the work position where each worker performs the work is acquired by the position acquisition unit of the image capture device, and a video of the work performed by each worker is captured by the image capture unit. Next, the reception unit 102 receives position information, which is the information pertaining to the position of a worker that the position acquisition unit acquired in step S110, and video information, which is information pertaining to the video of the work that the image capture unit captured in step S110. The reception unit 102 additionally acquires (receives) information about time from the communication device (acquiring step, S120).

Next, the determination unit 103 determines the presence or absence of an abnormality in the work on the basis of the position information and the video information received by the reception unit 102 (determining step, S130). Specifically, the position information and the video information are associated with each other for each worker, work specifics in the captured video of the work by each worker are identified on the basis of the position information, and information about a reference for the identified work specifics is compared to the video information to determine the presence or absence of an abnormality in the work by the worker. Next, a notification of the determination result from step S130 is provided (notifying step, S140). Note that the notifying in step S140 may involve, for example, transmitting the determination result from the transmission unit 104 to the communication device to notify the worker of the determination result, for example. Alternatively, determination results regarding all workers may be transmitted collectively to a specific communication device to provide notification of the determination results. Note that the notifying step may be performed only when an abnormality is present in the work; in this case, a notification of a determination result may be provided only to the communication device carried by the worker in whose work an abnormality is present. The notifying step may also not be performed, and the storage unit 105 may store the determination result in a manner that allows for later reading. This may also allow a supervisor who supervises the work to review the determination result later. Also, if it is determined that an abnormality is present in the work, the work may be redone with respect to the spot that is abnormal. The steps of the flowchart illustrated in Fig. 8 are performed once again when the work is redone.

Note that steps S120 to S140 are a determination method to be performed by having the determination system 100 follow an internally stored program.

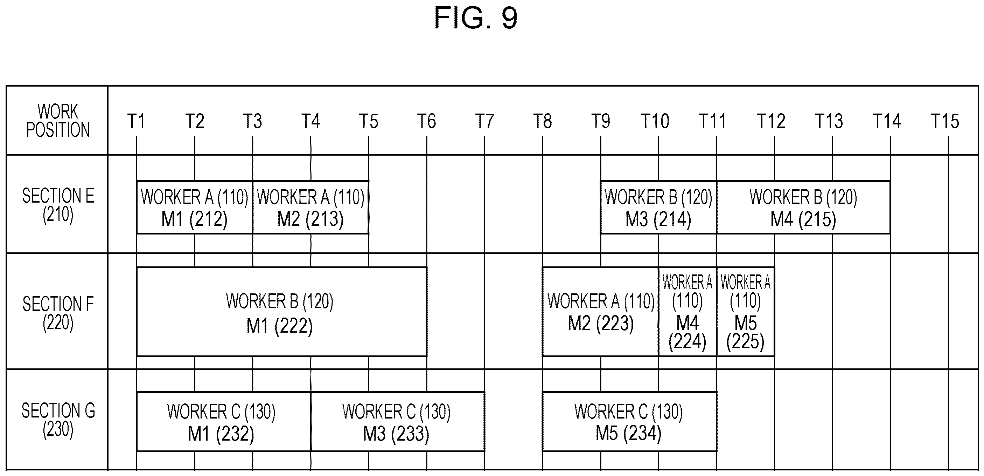

Fig. 9 is a diagram illustrating an example of the flow of work by workers in a first stage. The example in Fig. 9 illustrates the flow of work in a period from time T1 to time T15, this period being subdivided at intervals of a prescribed time. In section E 210, first, the worker A 110 performs fastening work at the fastening position M1 (212) in the period from time T1 to time T3. Next, the worker A 110 performs fastening work at the fastening position M2 (213) in the period from time T3 to time T5. Next, the worker B 120 performs fastening work at the fastening position M3 (214) in the period from time T9 to time T11. The worker B 120 then performs fastening work at the fastening position M4 (214) in the period from time T11 to time T14.

In section F 220, first, the worker B 120 performs fastening work at the fastening position M1 (222) in the period from time T1 to time T6. Next, the worker A 110 performs fastening work at the fastening position M2 (223) in the period from time T8 to time T10. Next, the worker A 110 performs fastening work at the fastening position M4 (224) in the period from time T10 to time T11. The worker A 110 then performs fastening work at the fastening position M5 (225) in the period from time T11 to time T12.

In section G 230, first, the worker C 130 performs fastening work at the fastening position M1 (232) in the period from time T1 to time T4. Next, the worker C 130 performs fastening work at the fastening position M3 (233) in the period from time T4 to time T7. The worker C 130 then performs fastening work at the fastening position M5 (234) in the period from time T8 to time T11. This completes the work in the first stage. In the work of the first stage, fastening work at M5 (216) in section E 210 is not performed yet.

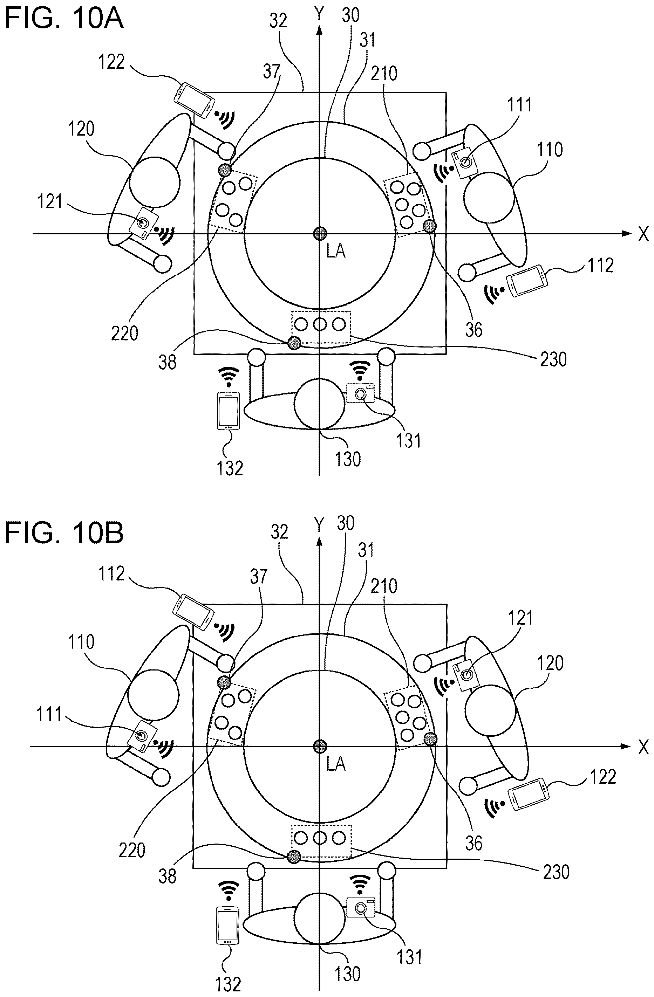

Figs. 10A and 10B are diagrams illustrating an example in which workers move and change work specifics. Fig. 10A is an example in which the worker A 110 works in section E 210, the worker B 120 works in section F 220, and the worker C 130 works in section G 230. Fig. 10B is an example in which the worker B 120 works in section E 210, the worker A 110 works in section F 220, and the worker C 130 works in section G 230. As illustrated by the example in Figs. 10A and 10B, in the first stage, the worker A 110 and the worker B 120 move (swap positions) and change the work specifics in section E 210 and section F 220.

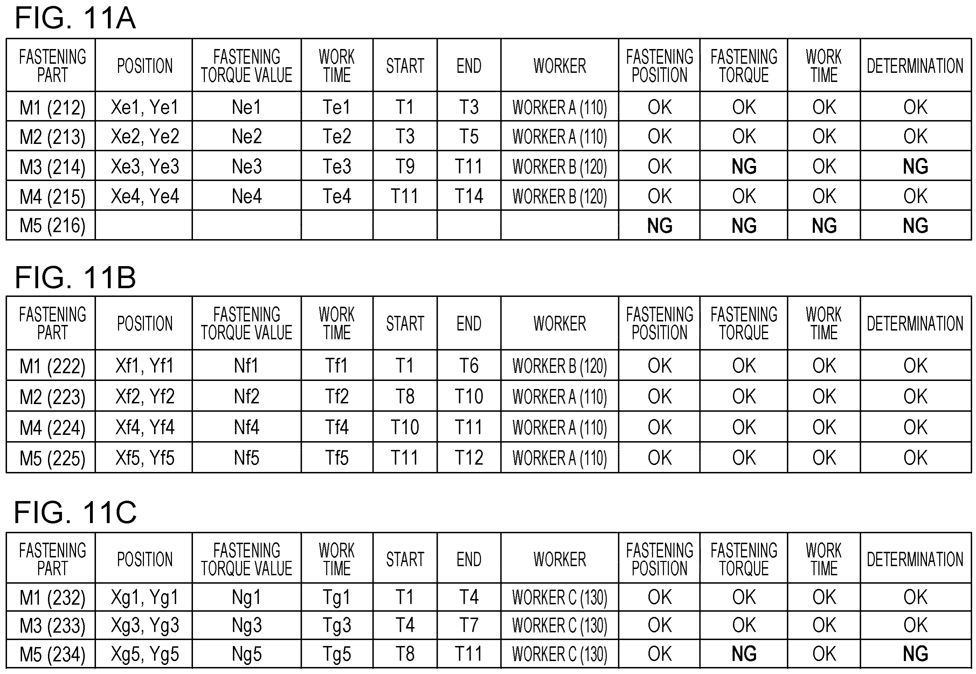

Figs. 11A to 11C are diagrams illustrating an example of determination processing by the determination unit 103 with respect to work by workers in the first stage. First, the determination unit 103 identifies the position where each worker has performed work and identifies the work specifics on the basis of the position information on each worker. For example, if the position information on the worker A 110 is the position (Xe10, Ye10), the work area that is closest to the position (Xe10, Ye10) and within a prescribed distance is identified from among the reference points (36, 37, 38). If the position (Xe10, Ye10) is closest to the reference point 36 and the distance between the position (Xe10, Ye10) and the reference point 36 is within a prescribed distance, the work specifics of the worker A 110 are identified to be fastening work in the work area of section E 210. In this way, the rough work specifics (work area, work position) of each worker at each time can be identified.

Additionally, the determination unit 103 identifies detailed work specifics of the worker at each time on the basis of the video information. For example, if the work specifics are roughly identified as indicating that the worker A 110 was performing work in the work area of section E 210 from time T1 to time T3, detailed work specifics are identified on the basis of the video information corresponding to the period from time T1 to time T3. Specifically, the specific fastening position within section E 210 that the worker A 110 worked on is identified on the basis of the video information corresponding to the period from time T1 to time T3. In this way, the detailed work specifics of each worker at each time can be identified. The identifying of detailed work specifics based on video information is performed by, for example, pre-calibrating the distance between the physical position of each fastening position and the reference points, and the distance between the position of each fastening position as seen in the captured video and the reference points.

Next, the determination unit 103 identifies the fastening position and the fastening torque in the work specifics identified on the basis of the video information. The fastening position and the fastening torque are information related to work. This information is calculated on the basis of the motion and/or posture of the worker in the video. Alternatively, the fastening torque is identified on the basis of a torque measurement value provided by a torque wrench when fastening is performed using the torque wrench. The determination unit 103 also calculates the work time at each fastening position. The work time is the difference between the start time of the work and the end time of the work. Information pertaining to the work time (the time taken to perform the work) is also included in the information related to work.

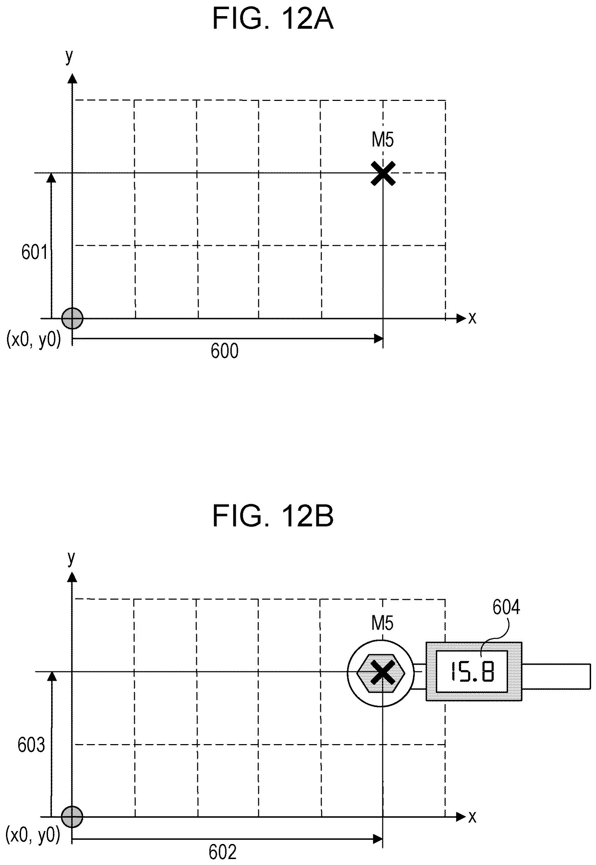

Figs. 12A and 12B are schematic diagrams of a case of acquiring information related to work on the basis of a torque measurement value. Figs. 12A and 12B illustrate the work video, and are examples of doing analysis in a video coordinate system in which a reference point of the lens barrel surface plate is set as the origin (x0, y0). The coordinates of the physical fastening position M5 and the coordinates of the digitized video position M5 are pre-calibrated and associated with each other such that the physical coordinates can be calculated on the basis of the video coordinate system. Fig. 12A illustrates a video taken prior to tightening a bolt at the fastening position M5. Based on the video, the center coordinates of the fastening position M5 can be calculated to be (600, 601). Fig. 12B illustrates a video taken when the bolt is tightened at the fastening position M5. Based on the video, the center coordinates of the bolt M5 can be calculated to be (602, 603). Also, the fastening torque is calculated from a torque wrench measurement value 604 shown in the video. The work time can also be calculated on the basis of the time from Fig. 12A to Fig. 12B.

According to the above, with respect to the work in the first stage, the fastening position (the position where the work was performed), the fastening torque value (the torque value during the work), the work time, and the worker can be associated with each other for each fastening position as illustrated in Figs. 11A to 11C.

Next, the determination unit 103 compares the fastening position, the fastening torque value, and the work time for each fastening position to information about a reference for the work specifics (for example, information in a work standards table stored in the storage unit 105).

For example, as illustrated in Fig. 11A, the actual fastening work at M1 (212) has a fastening position of (Xe1, Ye1), a fastening torque value of Ne1, and a work time of Te1. Also, as illustrated in Fig. 3B, the reference in the work standards table for M1 (212) has a fastening position of (x1, y3), a fastening position adjustment range of ±m1, a fastening torque value of N1, a fastening torque tolerance of ±n1, and a reference time of ST1. The determination unit 103 compares these values and determines that an abnormality is absent (OK) if the actual fastening work satisfies the reference in the work standards table.

In the example in Figs. 11A to 11C, an abnormality is determined to be present (NG) at M3 (214) in section E 210 because the fastening torque value does not satisfy the reference. An abnormality is also determined to be present (NG) at M5 (234) in section G 230 because the fastening torque value does not satisfy the reference. Also, in the first stage, work is not performed at M5 (216) in section E 210. Accordingly, the determination unit 103 determines that an abnormality is present (NG) with respect to M5 (216) in section E 210.

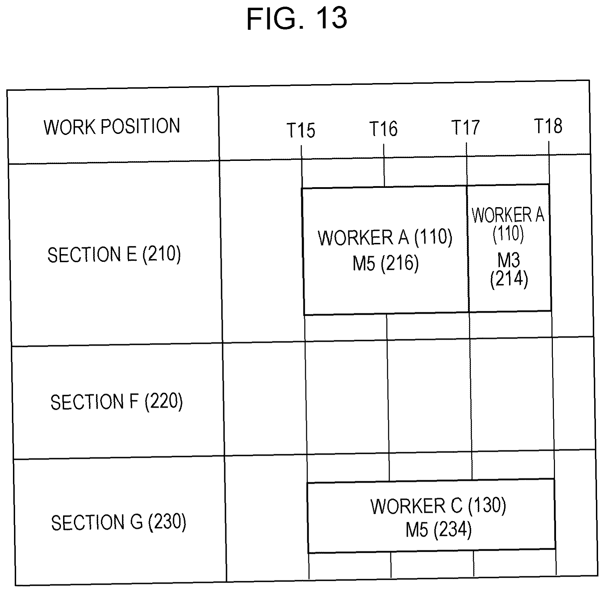

Fig. 13 is a diagram illustrating an example of the flow of work by workers in a second stage (from time T15 onward). In the second stage, work is performed with respect to the fastening positions where an abnormality was determined to be present (NG) in the first stage. In section E 210, first, the worker A 110 performs fastening work at the fastening position M5 (216) in the period from time T15 to time T17. Next, the worker A 110 performs fastening work at the fastening position M3 (214) in the period from time T17 to time T18. In section G 230, the worker C 130 performs fastening work at the fastening position M5 (234) in the period from time T15 to time T18.

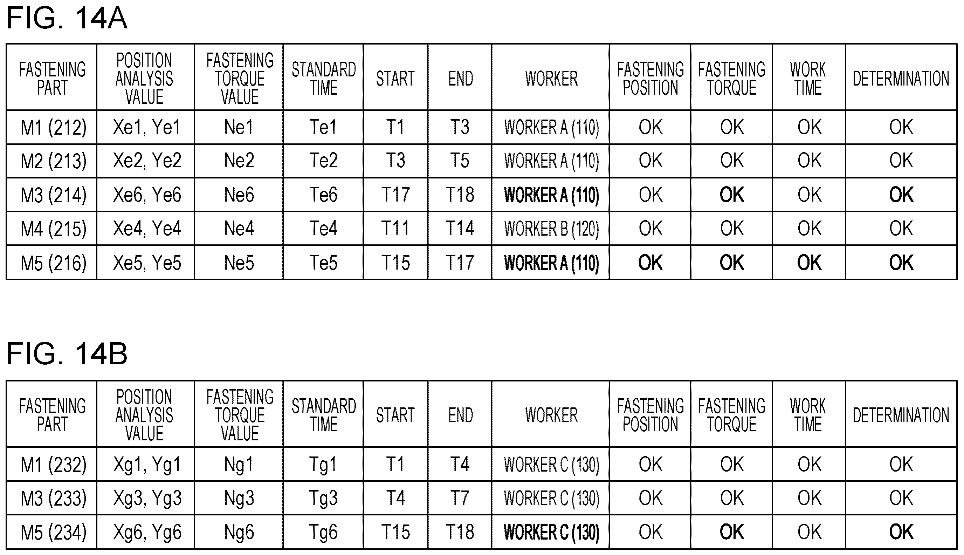

Figs. 14A and 14B are diagrams illustrating an example of determination processing by the determination unit 103 with respect to work by workers in the first stage and the second stage. First, in a manner similar to the first stage, the determination unit 103 identifies the position where each worker has performed work, identifies the work specifics, and identifies the rough work specifics (work area, work position) of each worker at each time on the basis of the position information on each worker. Additionally, in a manner similar to the first stage, the determination unit 103 identifies detailed work specifics of the worker at each time on the basis of the video information, and identifies the detailed work specifics of each worker at each time.

Next, in a manner similar to the first stage, the determination unit 103 calculates the fastening position and the fastening torque in the work specifics identified on the basis of the video information. This information is calculated on the basis of the motion and/or posture of the worker in the video. The determination unit 103 also calculates the work time at each fastening position. The work time is the difference between the start time of the work and the end time of the work. The information from the first stage is then updated using the information about the fastening position, the fastening torque value, the work time, and the worker for each fastening position that was calculated in the second stage. According to the above, with respect to the work completed up to the end of the second stage, the fastening position, the fastening torque value, the work time, and the worker can be associated with each other for each fastening position as illustrated in Figs. 14A and 14B.

Next, the determination unit 103 compares the fastening position, the fastening torque value, and the work time for each fastening position where work was performed in the second stage to information about a reference for the work specifics (for example, information in a work standards table stored in the storage unit 105). As illustrated in Figs. 14A and 14B, all fastening positions at the completion of the second stage satisfy the reference for the work specifics. Accordingly, the series of work operations is complete. The transmission unit 104 may also transmit to the communication device an indication that all work is complete with no abnormalities.

According to the determination system of the present embodiment, even if the worker moves and changes the work specifics, the work specifics and the video can be associated with each other by a simple configuration on the basis of the position information on the worker to determine whether or not the work by the worker was performed correctly. The determination system in the present embodiment exhibits an advantageous effect when a lone worker moves and changes the work specifics, but also exhibits a particularly advantageous effect when multiple workers move and change the work specifics. According to the determination system in the present embodiment, even if multiple workers move and change the work specifics, it can be determined whether or not the work by each worker was performed correctly, without needing to provide a worker recognition system such as a face authentication system.

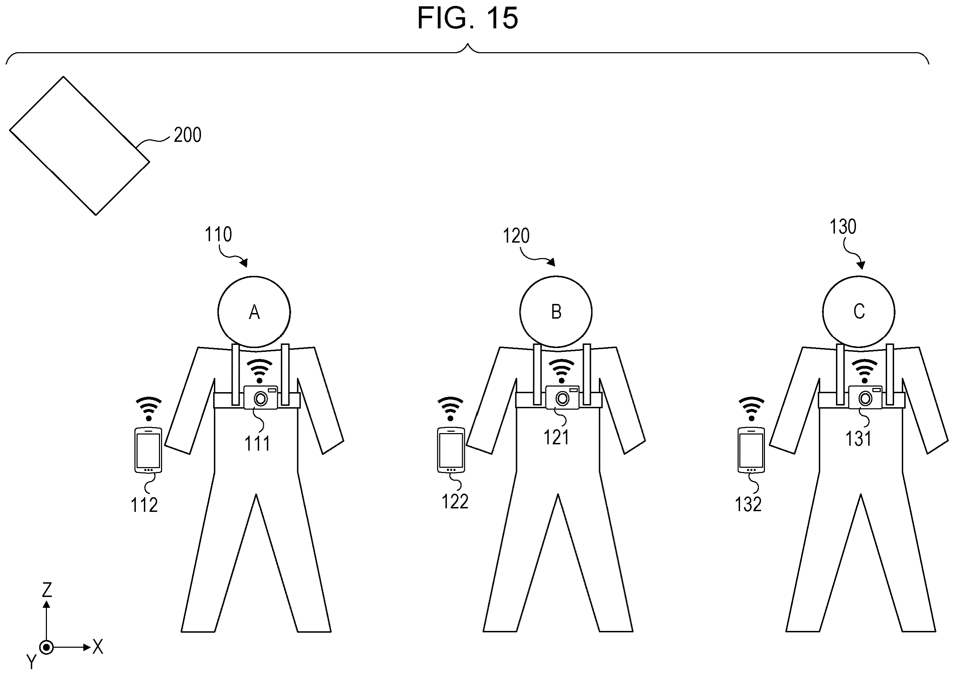

The present embodiment gives an example in which the positions of the workers are acquired by the position acquisition unit included in each image capture device, but the positions of the workers may also be acquired by an area camera 200. Fig. 15 is a schematic diagram of the acquisition of the positions of workers by the area camera 200. The area camera 200 captures a video of a wide work area (designated area) in which workers move, and identifies the positions of the workers in the work area. The work area includes a plurality of work positions, for example. This identification may also involve identifying worker names by comparing captured faces of the workers to pre-registered images of the faces of the workers, for example. Note that multiple area cameras 200 may also be provided.

In the present embodiment, the determination system 100 makes determinations regarding a single series of work operations for securing the projection optical system 30, but the determination system 100 may also make determinations regarding multiple series of work operations. For example, determinations regarding the presence or absence of an abnormality in each of the work of assembling the illumination optical system 50 and the work of securing the projection optical system 30 may be made at the same time. Alternatively, the determination system 100 may make determinations regarding the presence or absence of an abnormality in each of the work of assembling a plurality of exposure devices or other devices. The determination system 100 connected by a network to the locations where the work is performed for each device. In this case, the reception unit 102 acquires, via the network, position information for workers and video information capturing the work performed with respect to the plurality of devices, and the determination unit 103 determines the presence or absence of an abnormality in each of the work with respect to the plurality of devices.

Note that in the present embodiment, the work specifics are identified roughly, after which detailed work specifics are identified, but in certain cases, such as when there is only one work operation with respect to a work position, it may be unnecessary to identify detailed work specifics, and the work specifics may be identified solely on the basis of information about the position of a worker.

The present embodiment gives an example in which the determination unit 103 calculates the work time, but the transmission unit 104 may also calculate the work time. Also, the present embodiment gives an example in which the reception unit 102 receives video information, position information, and information pertaining to work time, but a single reception unit 102 need not receive all of this information, and information may also be received by a plurality of reception units 102. In this case, the determination unit 103 determines the presence or absence of an abnormality in the work by combining the information received by the plurality of reception units 102. Also, it is not mandatory to compare the work time to a reference in the determination of the presence or absence an abnormality in the work, and the communication device may also be omitted. Furthermore, although the present embodiment involves making determinations regarding work performed by workers, determinations may also be made in regard to work performed by robots rather than humans.

The present embodiment is described by taking the example of fastening work for securing the projection optical system 30, but the application of the determination system 100 according to the present embodiment is not limited to this example. Applicable work specifics (types of work) include assembly work, measurement work, transportation work, cable connection work, and other such manufacturing-related work in general. Cable connection work may require multiple cables to be connected correctly at prescribed positions. Accordingly, video information may be used as a basis for confirming whether each of the multiple cables is connected at a prescribed position. In this case, each of the multiple cables may be identified by component (cable) identification information (such as a label, a barcode, or a color) provided on each cable, the position where each identified cable is connected may be identified from video information, and a determination may be made regarding whether or not each identified cable is connected at the correct position. In this case, the component identification information is information related to work. Note that this determination may also be applied to components other than cables, and may also be applied to other work involving multiple components.

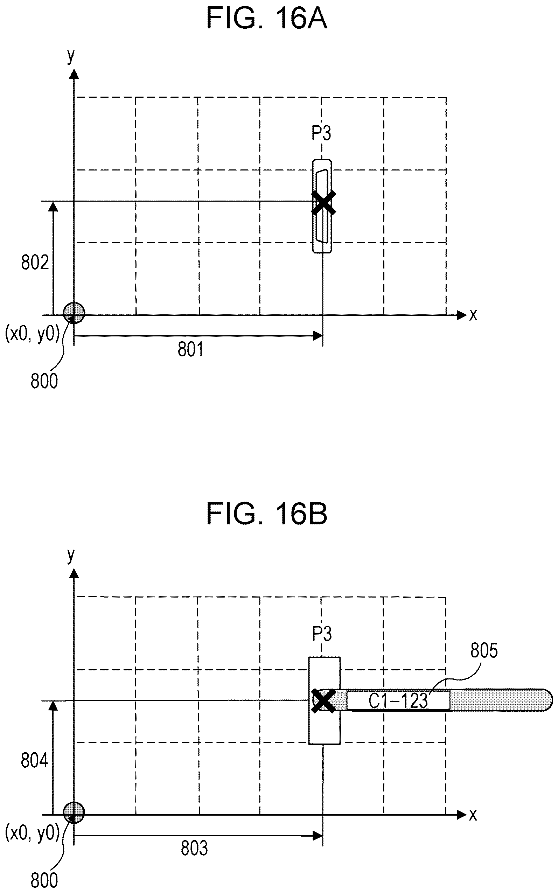

Figs. 16A and 16B are schematic diagrams of a case of acquiring information related to work in work involving the use of a cable. Figs. 16A and 16B illustrate the work video, and are examples of doing analysis in a video coordinate system in which a reference point is set as the origin 800 (x0, y0). The coordinates of a physical cable connection position P3 and the coordinates of a digitized video position P3 are pre-calibrated and associated with each other such that the physical coordinates can be calculated on the basis of the video coordinate system. Fig. 16A illustrates a video taken prior to connecting a cable at the connection position P3. Based on the video, the center coordinates of the connection position P3 can be calculated to be (801, 802). Fig. 16B illustrates a video taken when the cable is connected at the connection position P3.
Based on the video, the center coordinates of a cable connector can be calculated to be (803, 804).
Also, the connected cable is identified from a label 805 which is shown in the video and on which the name of the cable is written. The work time can also be calculated on the basis of the time from Fig. 16A to Fig. 16B.

The present embodiment is described by taking the example of an exposure device, but the application of the determination system 100 according to the present embodiment is not limited to this example. The determination system 100 according to the present embodiment may also be applied to other large-scale devices in which a plurality of workers proceed with work while moving and changing the work specifics. For example, the determination system 100 according to the present embodiment may also be applied to the manufacture of other devices for processing substrates such as semiconductor wafers and glass plates, including lithography devices, imprinting devices, planarization devices, ion implantation devices, development devices, etching devices, film forming devices, annealing devices, sputtering devices, and vapor deposition devices. Alternatively, the determination system 100 according to the present embodiment may also be applied to the manufacture of medical equipment devices (such as X-ray CT diagnostic devices).

### Second Embodiment

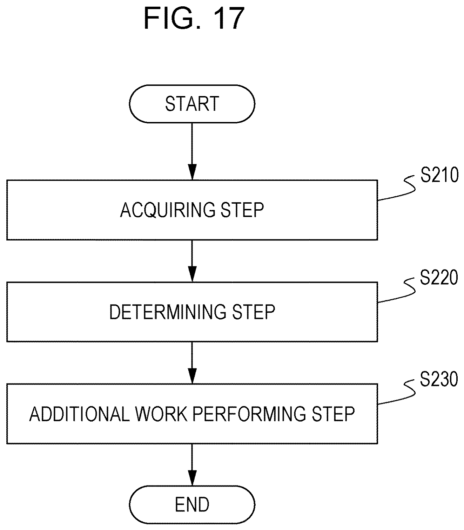

The present embodiment relates to an exposure device assembly method to be implemented when workers perform the work of assembling an exposure device at each of a plurality of work positions. Fig. 17 is a diagram illustrating a flowchart of the exposure device assembly method in the present embodiment. First, position information, which is information about the position of a worker when the worker performed the work, and video information, which is information pertaining to a video taken when the worker performed the work, are acquired (acquiring step, S210). Next, the presence or absence of an abnormality in the work is determined on the basis of the position information and the video information acquired in the acquiring step (determining step, S220). Then, additional work is performed on the basis of the determination result from the determining step (additional work performing step, S230).

Components used in the manufacture of the assembled exposure device (lithography device) include, for example, semiconductor integrated circuit (IC) elements, liquid crystal display elements, color filters, and micro-electromechanical systems (MEMS).

The exposure device exposes a substrate (silicon wafer, glass plate, or the like) coated with a photosensitive material to form a pattern on the substrate, for example.

With this assembly method, exposure devices can be manufactured to a higher standard than before.

The disclosure is not limited to the embodiments described above, and various changes and modifications are possible without departing from the spirit and scope of the disclosure. Accordingly, the claims are attached to make public the scope of the disclosure.

According to the present disclosure, it is possible to provide a determination system capable of determining the presence or absence of an abnormality in work by a worker, even if the worker changes the position where the work is performed and changes the work specifics.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. A determination system for making a determination regarding work performed by a worker at each of a plurality of work positions, the determination system comprising:
a position acquisition unit configured to acquire information on a position of the worker;
an image capture unit configured to capture a video of the work performed by the worker;
a reception unit configured to receive position information obtained from the position acquisition unit, the position information being information about the position of the worker when the worker performed the work, and video information obtained from the image capture unit, the video information being information pertaining to the video of the work performed by the worker; and
a determination unit configured to determine the presence or absence of an abnormality in the work on the basis of the position information and the video information received by the reception unit, wherein
the image capture unit is configured to capture the video of the work while being carried by the worker.

2. The determination system according to claim 1, wherein the determination unit is configured to associate the position information and the video information with each other.

3. The determination system according to claim 1, wherein the determination unit is configured to identify work specifics in the video information on the basis of the position information.

4. The determination system according to claim 3, wherein the determination unit is configured to identify detailed work specifics on the basis of the video information.

5. The determination system according to claim 3, wherein the determination unit is configured to compare the video information to information about a reference for the identified work specifics, and determine the presence or absence of an abnormality in the work performed by the worker.

6. The determination system according to claim 5, wherein the information about a reference for the work specifics includes at least one of the following: information included in work standards, information pertaining to a video of work that serves as a reference, and information pertaining to an image of work that serves as a reference.

7. The determination system according to claim 1, wherein the position acquisition unit is an area camera configured to capture a designated area in which the worker moves.

8. The determination system according to claim 1, wherein information related to work performed by the worker is identified on the basis of the video information.

9. The determination system according to claim 8, wherein the information related to work includes at least one of the following: the position where the work was performed, a torque value in the work,
component identification information, and the time taken to perform the work.

10. The determination system according to claim 1, wherein the determination unit is configured to determine the presence or absence of an abnormality in the work on the basis of the time taken to perform the work.

11. The determination system according to claim 1, further comprising a transmission unit configured to notify the worker of a determination result from the determination unit.

12. A determination system according to claim 1, further comprising a storage unit configured to store a determination result from the determination unit in a manner that allows for later reading.

13. The determination system according to claim 1, wherein the presence or absence of an abnormality in the work is determined with respect to each of a plurality of workers.

14. The determination system according to claim 1, wherein the work is for manufacturing an exposure device.

15. The determination system according to claim 1, wherein the reception unit is configured to acquire, via a network, the position information and the video information for work performed on a plurality of devices, and
the determination unit is configured to determine the presence or absence of an abnormality in each of the work performed on the plurality of devices.

16. A determination method for making a determination regarding work performed by a worker at each of a plurality of work positions, the determination method comprising:
an acquiring step for acquiring position information, which is information about the position of the worker when the worker performed the work, and video information obtained from an image capture unit, the video information being information pertaining to a video of the work performed by the worker; and
a determining step for determining the presence or absence of an abnormality in the work on the basis of the position information and the video information acquired in the acquiring step, wherein
the image capture unit is configured to capture the video of the work while being carried by the worker.

17. A non-transitory computer-readable storage medium storing a program for causing a computer to execute the determination method according to claim 16.

18. An exposure device assembly method to be executed when a worker performs work to assemble an exposure device at each of a plurality of work positions, the exposure device assembly method comprising:
an acquiring step for acquiring position information, which is information about the position of the worker when the worker performed the work, and video information obtained from an image capture unit, the video information being information pertaining to a video of the work performed by the worker; and
a determining step for determining the presence or absence of an abnormality in the work on the basis of the position information and the video information acquired in the acquiring step
wherein
the image capture unit is configured to capture the video of the work while being carried by the worker.

19. The exposure device assembly method according to claim 18, further comprising:
an additional work performing step for performing additional work on the basis of a determination result from the determining step.
